# EUROPEAN PATENT SPECIFICATION

(11) **EP 3 544 813 B1**
(45) Date of publication and mention of the grant of the patent: **23.02.2022**
(21) Application number: 17801052.6
(22) Date of filing: 23.11.2017
(51) Int. Cl.: B32B 27/08, B32B 27/32

(54) **MULTI-LAYER FILM**
MEHRSCHICHTIGE FOLIE
FILM MULTICOUCHE

(30) Priority: 24.11.2016 EP 16200444
(43) Date of publication of application: 02.10.2019
(73) Proprietor: SABIC Global Technologies B.V., 4612 PX Bergen op Zoom (NL)
(72) Inventor: SCALA, Attilio, 6160 GA Geleen (NL); OUDDANE, Mohamed, Riyadh 562125 (SA); LUAN, Lixing, 6160 GA Geleen (NL)
(74) Representative: Sabic Intellectual Property Group
(86) International application number: PCT/EP2017/080154
(87) International publication number: WO 2018/096015

(56) References cited:
- EP-A1- 2 669 086
- WO-A1-01/98409
- WO-A1-2012/003510
- CN-B- 103 568 425
- JP-B2- 4 954 882

## Description

The invention relates to a multi-layer film for stretch hood applications, an article comprising said film, the use of said film and to a process for the preparation of said film.

Films for stretch hood application may be used in the form of a tube sealed at one end, which may be stretched over palletized load to secure it on the pallet.

Films for stretch hood applications are thereby known, for example US839086, which describes a film comprising at least three layers with a core layer comprising at least 50 wt.% of an ethylene copolymer having a density of less than 0.910 g/cm³. Multi-layer films for stretch-hood applications are for example disclosed in WO2012/003510A1, where multi-layer films are disclosed having a core layer comprising ULDPE.

However, despite previous research in the field, there is always a continuous need for films with a good holding force and/or a good elastic recovery.

Therefore, it is the object of the invention to provide multi-layer films having a good holding force and/or a good elastic recovery.

This object is achieved by a multi-layer film for stretch hood applications comprising at least three layers, with two outer layers, at least one core layer, preferably exactly one core layer, wherein the core layer comprises between 25 wt. % and < 50 wt. % of a first ethylene copolymer having a density between 0.850 and < 0.915 g/cm³ based on the total weight of the core layer, between 25 wt. % and <50 wt.% of a second ethylene copolymer having a density between > 0.910 g/cm³ and 0.918 g/cm³ based on the total weight of the core layer and between > 0 wt. % and 50 wt.% of polyethylene based on the total weight of the core layer.This may allow to provide multi-layer films having a good holding force and/or a good elastic recovery, especially also at higher temperatures such as for example > 25° C.

Polyethylene which may be present in the core layer in an amount of between > 0 wt. % and 50 wt.% of polyethylene based on the total weight of the core layer may be linear low density polyethylene and/or low density polyethylene and/or high density polyethylene and/or blends of two or more thereof, preferably for example an low density polyethylene (LDPE) with a density for example between 0.915 to 0.925 g/cm³.

This may also contribute to improve the holding force even further.

With outer layers are meant the layers that are located on the outside of the film. The outer layers may thus preferably adjacent to only one other layer of the multi-layer film according to the invention on only one of their sides. As compared to other layers in the multi-layer film of the invention, the outer layers have a substantially larger portion of the layer that faces the outside. With core layer is meant a layer that is located between at least two outer layers and/or at least two intermediate layers, preferably in the middle of the multi-layer arrangement of the multi-layer film according to the invention, especially when the multi-layer film is film with at least three or exactly three layers. Intermediate layer may thereby designate a layer that is located between at least one outer layer and at least one core layer. An intermediate layer may thereby be adjacent to at least outer layer and/or at least one core layer.

With adjacent layer, as used herein, is meant a layer that is in direct contact with the layer to which it is described as adjacent. Each adjacent layer to an outer layer, would therefore be in direct contact with that outer layers. A layer adjacent to at least one outer layer may thereby be for example a core layer or an intermediate layer.

An ethylene copolymer may be a copolymer of ethylene and at least one α-olefin, such as for example 1-butene, 1-pentene, 1-hexene, 1-octene, or 4-methylpentene-l, most preferably 1-butene, 1-hexene or 1-octene. An ethylene copolymer may especially be a polyolefin plastomer or a polyolefin elastomer.

Preferably, an ethylene copolymer according to the invention has a density between 0.850 and < 0.915 g/cm³, more preferably, the density of an ethylene copolymer is from 0.900 to 0.914 g/cm³. Most preferably, the density of the linear low density polyethylene if from 0.905 to 0.913 g/cm³.

Preferably, a first ethylene copolymer according to the invention has a density between 0.850 and < 0.910 g/cm³, more preferably, the density of an ethylene copolymer is from 0.900 to 0.909 g/cm³. Most preferably, the density of the linear low density polyethylene if from 0.903 to 0.908 g/cm³.

Preferably, a second ethylene copolymer according to the invention has a density between 0.911 and < 0.918 g/cm³, preferably 0.911 and 0.915 g/cm³, more preferably, the density of an ethylene copolymer is from > 0.911 to 0.915 g/cm³.

For purpose of the invention, the density is determined using ISO1872-2.

Preferably, the melt flow index of an ethylene copolymer, especially the first and/or second ethylene copolymer, according to the invention ranges from 0.1 to 4 g/10min, for example from 0.3 to 3 g/10min, for example from 0.2 to 2 g/10min, for example from 0.5 to 1.5 g/10min. For purpose of the invention, the melt flow index is determined herein using ISO1133:2011 (190°C/2.16kg).

The ratio of the melt flow indexes of the second ethylene copolymer to the first ethylene copolymer may preferable be between 0.5 and 1.5, preferably between > 1 and 1.5.

In the multi-layer film of the invention, the outer layers may for example comprise polyethylene, especially for example linear low density polyethylene and/or high density polyethylene and/or low density polyethylene and/or an ethylene copolymer and/or polypropylene and/or blends of two or more of thereof. The outer layers may especially for example be of the same and/or different material and/or comprise the same and/or different linear low density polyethylene.

The amount of polyethylene and/or linear low density polyethylene and/or high density polyethylene and/or low density polyethylene in at least one or in both of the outer layer(s) may be preferably, at least 20% by weight based on the total weight of the respective layer, at least 30% by weight based on the total weight of the respective layer, at least 40% by weight based on the total weight of the respective layer, at least 50% by weight based on the total weight of the respective layer, at least 60% by weight based on the total weight of the respective layer, more preferably at least 70%, for example at least 80%, for example at least 90%, for example at least 99%, for example 100% by weight based on the total weight of the respective layer. Preferably, the outer layers may be of the same material (e.g. comprise all the same components in the same amounts) and/or comprise the same linear low density polyethylene. However, it is also possible that outer layers comprise different materials and/or a different linear low density polyethylene.

At least one or both outer layer(s) of the multi-layer film of the invention may comprise other components besides polymers, especially polyethylene and/or linear low density polyethylene. For example, at least one or both outer layer(s) may further comprise additives, especially for example additives as described herein.

Polyethylene may thereby mean linear low density polyethylene and/or low density polyethylene and/or high density polyethylene and/or blends of two or more thereof.

A multi-layer film according to the invention may comprise at least one, preferably exactly one, core layer.

The production processes of LDPE, HDPE and LLDPE are summarized in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalyzed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

With linear low density polyethylene (LLDPE) as used herein is meant a low density polyethylene copolymer comprising ethylene and a C3- C10 alpha-olefin co monomer (ethylene-alpha olefin copolymer). Suitable alpha-olefin co monomers include 1-butene, 1-hexene, 4-methyl pentene and 1-octene. The preferred co monomer is 1-hexene. Preferably, the alpha-olefin co monomer may be present for example in an amount of about 1 to about 25, preferably 5 to about 20 percent by weight of the ethylene-alpha olefin copolymer, preferably of 5 to about 20 percent by weight of the ethylene-alpha olefin copolymer, more preferably an amount of from about 7 to about 15 percent by weight of the ethylene-alpha olefin copolymer. LLDPE, as used herein, may be produced for example using metallocene and/or Ziegler-Natta catalysts.

Preferably, the linear low density polyethylene (LLDPE) has a density between 0.915 g/cm³ and 0.945 g/ cm³, more preferably, the density of the linear low density polyethylene is from 0.916 to 0.934 g/cm³. Most preferably, the density of the linear low density polyethylene if from 0.917 to 0.920 g/cm³.

For purpose of the invention, the density is determined using ISO1872-2.

Preferably, the melt flow index of the linear low density polyethylene ranges from 0.1 to 4 g/10min, for example from 0.3 to 3 g/10min, for example from 0.2 to 2 g/10min, for example from 0.5 to 1.5 g/10min. For purpose of the invention, the melt flow index is determined herein using ISO1133:2011 (190°C/2.16kg).

The technologies suitable for the LLDPE manufacture include but are not limited to gas- phase fluidized-bed polymerization, polymerization in solution, and slurry polymerization.

According to a preferred embodiment of the present invention the LLDPE has been obtained by gas phase polymerization in the presence of a Ziegler-Natta catalyst. According to another preferred embodiment, the LLDPE may be obtained by gas phase or slurry polymerization in the presence of a metallocene catalyst.

Preferably, the density of the low density polyethylene (LDPE) ranges from 0.915 to 0.932 g/cm³, further preferred for example from 0.917 to 0.926 g/cm³. Preferably, the melt flow index as determined using ISO1133:2011 (190°C/2.16kg) ranges from 0.01 to 4 g/10min, for example from 0.09 to 3g/10min, for example from 0.1 to 1 g/10min, for example from 0.2 to 0.6 g/10min.

The LDPE applied in the present film may be produced by use of autoclave high pressure technology and by tubular reactor technology.

Preferably, the density of the HDPE ranges from 0.940 to 0.965 g/cm³. Preferably, the melt flow index as determined using ISO1133:2011 (190°C/2.16kg) ranges from 0.1 to 4 g/10 min, for example from 0.3 to 3 g/10min, for example from 0.2 to 2 g/10min, for example from 0.5 to 1.5 g/10min.

With polypropylene as used herein is meant propylene homopolymer or a copolymer of propylene with an α-olefin, for example an α-olefin chosen from the group of α-olefin having 2 or 4 to 10 C-atoms, for example ethylene, for example wherein the amount of α-olefin is less than 10wt% based on the total propylene copolymer.

Polypropylene and a copolymer of propylene with an α-olefin can be made by any known polymerization technique as well as with any known polymerization catalyst system. Regarding the techniques, reference can be given to slurry, solution or gasphase polymerizations; regarding the catalyst system reference can be given to Ziegler-Natta, metallocene or single-site catalyst systems. All are, in themselves, known in the art.

Preferably, the polypropylene used in the invention, is a propylene co-polymer, preferably a copolymer of propylene and ethylene.

The polypropylene has a melt temperature (Tₘ) from 140°C to 200°C and/or a crystallization temperature (T_{c}) from 100°C to 140°C, wherein the Tₘ and T_{c} are determined using Differential Scanning Calorimetry according to ASTM D 3418-08 using a scan rate of 10°C/min on a sample of 10mg and using the second heating cycle.

Preferably, the melt mass flow rate of the polypropylene as determined using ASTM D1238-10 (230°C/2.16 kg) ranges from 0.3-100 g/10min. Preferably, the melt mass flow rate of the polypropylene ranges from 0.5 to 25g/10min, more preferably from 0.5 to 10 g/10min.

In the composition of the invention, the amount of polypropylene is from 0.005 to 99wt% based on the total weight of the linear low density polyethylene and the polypropylene in the composition.

The core layer, of a multi-layer film according to the invention may for example comprises between 25 wt. % and < 50 wt. %, preferably between 30 wt. % and 47.5 wt. %, further preferred between 35 wt. % and 45 wt. %, further preferred between 37.5 wt. % and 42.5 wt.%, of a first ethylene copolymer having a density between 0.850 and < 0.910 g/cm³, preferably between 0.850 and < 0.910 g/cm³, further preferred between 0.900 and 0.909 g/cm³ and/or between 25 wt. % and <50 wt. %, preferably between 30 wt. % and 47.5 wt. %, further preferred between 35 wt. % and 45 wt. %, further preferred between 37.5 wt.% and 42.5 wt.%, of a second ethylene copolymer having a density between > 0.910 g/cm³ and 0.920 g/cm³, preferably > 0.910 g/cm³ and 0.918 g/cm³, further preferred between 0.911 g/cm³ and < 0.918 g/cm³, further preferred between 0.911 g/cm³ and 0.916 g/cm³, and/or between <0 wt.% and 50 wt. %, preferably between 5 wt.% and 40 wt. %, further preferred between 10 wt.% and 30 wt. %, further preferred between 15 wt.% and 25 wt. %, of polyethylene, preferably for example LDPE.

The core layer of a multi-layer film according to the invention may for example comprises between 30 wt. % and 47.5 wt. %, of a first ethylene copolymer having a density between 0.850 and < 0.910 g/cm³ and between 30 wt. % and 47.5 wt. %, further preferred between 35 wt.% and 42.5 wt.%, of a second ethylene copolymer having a density between > 0.910 g/cm³ and 0.918 g/cm³ and between 5 wt.% and 40 wt. % of LDPE with a density between 0.915 and 0.932 g/cm³.

The core layer of a multi-layer film according to the invention may for example comprises between 35 wt. % and 45 wt. %, of a first ethylene copolymer having a density between 0.850 and < 0.910 g/cm³ and between 35 wt. % and 45 wt. %, further preferred between 35 wt.% and 42.5 wt.%, of a second ethylene copolymer having a density between > 0.910 g/cm³ and 0.918 g/cm³ and between 10 wt.% and 30 wt. % of LDPE with a density between 0.915 and 0.932 g/cm³.

The core layer of a multi-layer film according to the invention may for example comprises between 37.5 wt. % and 42.5 wt.%, of a first ethylene copolymer having a density below 0.850 and < 0.910 g/cm³ and between 37.5 wt.% and 42.5 wt.% of a second ethylene copolymer having a density between 0.911 g/cm³ and < 0.918 g/cm³, further preferred between 0.911 g/cm³ and 0.916 g/cm³, and between <1 wt.% and 50 wt. %, preferably between 15 wt.% and 25 wt. % of LDPE with a density between 0.917 and 0.926 g/cm³.

The components of the core layer according to the invention may preferably add up to 100 wt. % of the core layer.

The thickness of multi-layer film of the invention may range for example from 30 to 200 µm, for example from 50 to 150 µm, especially for example between 60 to 125 µm. Not all layers in the multi-layer film of the invention need to have the same thickness. For example, one or more layers in the multi-layer film may be thicker than the other layers, especially for example to increase the stability of the production process.

For a multi-layer film according to the invention, the ratio of the thickness of an outer layer and/or both outer layer to the core layer may be between 1:1 and 1:4 especially for example 1:2 and/or 1:3.

For example, each layer, including the core layer, in the multi-layer film of the invention may comprise an amount of additives of 0 to 10 wt. %, especially for example 0 to 8 wt. % based on the total weight of the layer, wherein the sum of the polymer(s) and the additives is 100 wt. % based on the total weight of the layer.

Additives may thereby especially for example be UV stabilizers, antistatic agents, slip/anti-block agents, fluor elastomers used as polymer processing aids and/or mixtures of two or more thereof. Especially for example an erucamide and/or an oleamide and/or silica and/or talc.

Each layer may also contain appropriate amounts of other additives such as for example fillers, antioxidants, pigments and polymers depending on the specific use of the multi-layer film. Typically, additives may be present in a layer in an amount of 10 to 10000ppm, for example in an amount of 100 to 5000ppm based on the layer. Therefore, the invention also relates to a multi-layer film wherein one or more layers further comprise(s) one or more additives or other additives.

The multi-layer films of the present invention may for example have an elastic recovery stretch hooder 100/75 for example of of > 50 %, preferably > 55 %, preferably > 60 %, preferably > 70 %, further preferred > 75 %.

The elastic recovery stretch hooder 100/75 was thereby measured as follows. A film sample of dimensions 100 mm x 25 mm and a thickness between 80 µm and 100 µm was used for the stretch hooder 100/75 test. The film was stretched to 100 % elongation at a speed of 1000 mm/min using an Instron 5581 mechanical testing system. Once 100 % elongation in the machine direction (MD) was reached, the film sample was kept like that for 15 seconds and then returned back to 75 % elongation at a speed of 1000 mm/min. After waiting at 75 % elongation for 5 minutes, the load on the sample was measured and recorded as holding force MD (holding force in machine direction). Then the film was returned to 0% elongation and the film sample was removed. The procedure above for measuring holding force can also be carried out at different temperatures for example 20 °C, 30 °C, 40 °C, 50 °C or 60 °C.

After 24 hours of waiting under ambient conditions, final length of the film was measured and permanent deformation as well as elastic recovery was calculated as: Permanent deformation = ((final length - initial length) / Initial length) x 100 Elastic recovery (in %) = 100 - permanent deformation.

The multi-layer films of the present invention may for example have an holding force in machine direction (holding force MD) per µm for example of >0.09 N, preferably > 0.10 N, further preferred > 0.12 N, especially when the procedure for measuring is carried out for example at 20 °C and/or 30 °C and/or 40 °C and/or 50 °C and/or 60 °C. A high holding force may thereby be advantageous for example for down gauging.

The present invention also concerns an article and/or packaging comprising a multilayer film according to the invention.

The invention further concerns the use of the multi-layer film according to the invention for stretch hood applications, especially stretch hood packaging applications, whereby multi-layer film according to the invention may especially for example be used in the form of a tube sealed at one end, which may be stretched over palletized load to secure it on the pallet.

The multi-layer films of the present invention may be prepared by any method known in the art. Multi-layer structures may be prepared for example by a blown film co-extrusion process, for example as disclosed in "Film Extrusion Manual", (TAPPI PRESS, 2005, ISBN 1 -59510-075-X, Editor Butler, pages 413-435).

For example, in the process of coextrusion, the various resins may be first melted in separate extruders and then brought together in a feed block. The feed block is a series of flow channels which bring the layers together into a uniform stream. From this feed block, this multi-layer material then flows through an adapter and out a film die. The blown film die may be an annular die. The die diameter may be a few centimeters to more than three meters across. The molten plastic is pulled upwards from the die by a pair of nip rolls high above the die (from for example 4 meters to more than 20 meters). Changing the speed of these nip rollers will change the gauge (wall thickness) of the film. Around the die an air-ring may be provided. The air exiting the air-ring cools the film as it travels upwards. In the center of the die there may be an air outlet from which compressed air can be forced into the center of the extruded circular profile, creating a bubble. This expands the extruded circular cross section by some ratio (a multiple of the die diameter). This ratio, called the "blow-up ratio" can be just a few percent to for example more than 300 percent of the original diameter. The nip rolls flatten the bubble into a double layer of film whose width (called the "layflat") is equal to ½ of the circumference of the bubble. This film may then be spooled or printed on, cut into shapes, and heat sealed into bags or other items.

## Claims

1. Multi-layer film for stretch hood applications comprising at least three layers, with two outer layers and at least one core layer, wherein the core layer comprises between 25 wt. % and < 50 wt. % of a first ethylene copolymer having a density between 0.850 and < 0.910 g/cm³ based on the total weight of the core layer, between 25 wt. % and <50 wt. % of a second ethylene copolymer having a density between > 0.910 g/cm³ and 0.918 g/cm³ based on the total weight of the core layer and between > 0 wt. % and 50 wt.% of polyethylene based on the total weight of the core layer, wherein the density is determined in accordance with ISO 1872-2.

2. Multi-layer film according to claim 1, wherein the amount of linear low density polyethylene in at least one or in both outer layers is preferably at least 60% by weight based on the total weight of the respective layer.

3. Multi-layer film according to claim 1 or claim 2, wherein the outer layers are of the same material and/or comprise the same linear low density polyethylene.

4. Multi-layer film according to any one of claims 1-3, wherein the core layer comprises between 30 wt. % and 47.5 wt. %, further preferred between 35 wt. % and 45 wt.% further preferred between 37.5 wt. % and 42.5 wt.%, of a first ethylene copolymer based on the total weight of the core layer.

5. Multi-layer film according to any one of claims 1-4, wherein the core layer comprises between 30 wt. % and 47.5 wt. %, further preferred between 35 wt.% and 45 wt.%, further preferred between 37.5 wt. % and 42.5 wt.%, of a second ethylene copolymer based on the total weight of the core layer.

6. Multilayer film according to any one of claims 1-5, wherein core layer comprises between 5 wt.% and 40 wt. %, further preferred between 10 wt.% and 30 wt. %, further preferred between 15 wt.% and 25 wt. %, of a polyethylene, preferably of LDPE, based on the total weight of the core layer.

7. Multi-layer film according to any one of claims 1-6, wherein the density, which is determined using ISO 1872-2, of the first ethylene copolymer of the core layer is between 0.900 and < 0.909 g/cm³.

8. Multi-layer film according to any one of claims 1-7, wherein the density of the second ethylene copolymer of the core layer is between 0.911 g/cm³ and < 0.918 g/cm³, preferably 0.911 and 0.915 g/cm³, more preferably, the density of an ethylene copolymer is from > 0.911 to 0.915 g/cm³, wherein the densities are determined using ISO 1872-2.

9. Multi-layer film according to any one of claims 1-8, wherein the polyethylene of the core layer is LDPE and/or density of the polyethylene and/or LDPE of the core layer is between 0.915 to 0.932 g/cm³, further preferred for example from 0.917 to 0.926 g/ cm3, wherein the densities are determined using ISO 1872-2.

10. Multi-layer film according to any one of claims 1-9, wherein the melt flow index of the first and/or second ethylene copolymer ranges from 0.1 to 4 g/10min, preferably from 0.3 to 3 g/10min, further preferred from 0.2 to 2 g/10min, further preferred from 0.5 to 1.5 g/10min, wherein the melt flow index is determined in accordance with ISO 1133:2011, 190°C, 2.16 kg.

11. Multi-layer film according to any one of claims 1-10, wherein the ratio of the melt flow indexes of the second ethylene copolymer to the first ethylene copolymer is between 0.5 and 1.5, preferably between > 1 and 1.5.

12. Article and/or packaging comprising a multi-layer film according to any one of claims 1-11.

13. Use of the multi-layer film according to any one of claims 1-11 for stretch hood applications.

## Patentansprüche

1. Mehrschichtige Folie für Haubenstretchanwendungen, umfassend wenigstens drei Schichten mit zwei Außenschichten und wenigstens einer Kernschicht, wobei die Kernschicht zwischen 25 Gew.-% und <50 Gew.-% eines ersten Ethylencopolymers mit einer Dichte zwischen 0,850 und <0,910 g/cm³ bezogen auf das Gesamtgewicht der Kernschicht, zwischen 25 Gew.-% und <50 Gew.-% eines zweiten Ethylencopolymers mit einer Dichte zwischen >0,910 g/cm³ und 0,918 g/cm³ bezogen auf das Gesamtgewicht der Kernschicht und zwischen >0 Gew.-% und 50 Gew.-% Polyethylen bezogen auf das Gesamtgewicht der Kernschicht umfasst, wobei die Dichte in Übereinstimmung mit ISO 1872-2 bestimmt wird.

2. Mehrschichtige Folie nach Anspruch 1, wobei die Menge an linearem Polyethylen niedriger Dichte in wenigstens einer oder in beiden Außenschichten vorzugsweise wenigstens 60 Gew.-% bezogen auf das Gesamtgewicht der jeweiligen Schicht beträgt.

3. Mehrschichtige Folie nach Anspruch 1 oder 2, wobei die Außenschichten aus demselben Material sind und/oder dasselbe lineare Polyethylen niedriger Dichte umfassen.

4. Mehrschichtige Folie nach einem der Ansprüche 1 bis 3, wobei die Kernschicht zwischen 30 Gew.-% und 47,5 Gew.-%, weiter bevorzugt zwischen 35 Gew.-% und 45 Gew.-%, weiter bevorzugt zwischen 37,5 Gew.-% und 42,5 Gew.-% eines ersten Ethylencopolymers bezogen auf das Gesamtgewicht der Kernschicht umfasst.

5. Mehrschichtige Folie nach einem der Ansprüche 1 bis 4, wobei die Kernschicht zwischen 30 Gew.-% und 47,5 Gew.-%, weiter bevorzugt zwischen 35 Gew.-% und 45 Gew.-%, weiter bevorzugt zwischen 37,5 Gew.-% und 42,5 Gew.-%, eines zweiten Ethylencopolymers bezogen auf das Gesamtgewicht der Kernschicht umfasst.

6. Mehrschichtige Folie nach einem der Ansprüche 1 bis 5, wobei die Kernschicht zwischen 5 Gew.-% und 40 Gew.-%, weiter bevorzugt zwischen 10 Gew.-% und 30 Gew.-%, weiter bevorzugt zwischen 15 Gew.-% und 25 Gew.-% eines Polyethylens, vorzugsweise von LDPE, bezogen auf das Gesamtgewicht der Kernschicht umfasst.

7. Mehrschichtige Folie nach einem der Ansprüche 1 bis 6, wobei die Dichte, die unter Verwendung von ISO 1872-2 bestimmt wird, des ersten Ethylencopolymers der Kernschicht zwischen 0,900 und <0,909 g/cm³ liegt.

8. Mehrschichtige Folie nach einem der Ansprüche 1 bis 7, wobei die Dichte des zweiten Ethylencopolymers der Kernschicht zwischen 0,911 g/cm³ und <0,918 g/cm³, vorzugsweise zwischen 0,911 und 0,915 g/cm³ liegt, stärker bevorzugt die Dichte eines Ethylencopolymers von >0,911 bis 0,915 g/cm³ beträgt, wobei die Dichten unter Verwendung von ISO 1872-2 bestimmt werden.

9. Mehrschichtige Folie nach einem der Ansprüche 1 bis 8, wobei das Polyethylen der der Kernschicht LDPE ist und/oder die Dichte des Polyethylens und/oder des LDPE der Kernschicht zwischen 0,915 und 0,932 g/cm³ liegt, ferner bevorzugt beispielsweise zwischen 0,917 und 0,926 g/cm³ liegt, wobei die Dichten unter Verwendung von ISO 1872-2 bestimmt werden.

10. Mehrschichtige Folie nach einem der Ansprüche 1 bis 9, wobei der Schmelzindex des ersten und/oder des zweiten Ethylencopolymers im Bereich von 0,1 bis 4 g/10 min, vorzugsweise von 0,3 bis 3 g/10 min, weiter bevorzugt von 0,2 bis 2 g/10 min, weiter bevorzugt von 0,5 bis 1,5 g/10 min, wobei der Schmelzindex in Übereinstimmung mit ISO 1133:2011, 190 °C, 2,16 kg bestimmt wird.

11. Mehrschichtige Folie nach einem der Ansprüche 1 bis 10, wobei das Verhältnis der Schmelzflussindizes des zweiten Ethylencopolymers zu dem ersten Ethylencopolymer zwischen 0,5 und 1,5, vorzugsweise zwischen >1 und 1,5 liegt.

12. Erzeugnis und/oder Verpackung, umfassend eine mehrschichtige Folie nach einem der Ansprüche 1 bis 11.

13. Verwendung der mehrschichtigen Folie nach einem der Ansprüche 1 bis 11 für Haubenstretchanwendungen.

## Revendications

1. Film multicouche pour des applications de houssage comprenant au moins trois couches, avec deux couches externes et au moins une couche centrale, dans lequel la couche centrale comprend entre 25 % en poids et < 50 % en poids d'un premier copolymère d'éthylène ayant une masse volumique entre 0,850 et < 0,910 g/m³ sur la base du poids total de la couche centrale, entre 25 % en poids et < 50 % en poids d'un second copolymère d'éthylène ayant une masse volumique entre > 0,910 g/cm³ et 0,918 g/cm³ sur la base du poids total de la couche centrale et entre > 0 % en poids et 50 % en poids de polyéthylène sur la base du poids total de la couche centrale, dans lequel la masse volumique est déterminée conformément à la norme ISO 1872-2.

2. Film multicouche selon la revendication 1, dans lequel la quantité de polyéthylène basse densité linéaire dans au moins une couche externe ou dans les deux couches externes est de préférence d'au moins 60 % en poids sur la base du poids total de la couche respective.

3. Film multicouche selon la revendication 1 ou la revendication 2, dans lequel les couches externes sont constituées du même matériau et/ou comprennent le même polyéthylène basse densité linéaire.

4. Film multicouche selon l'une quelconque des revendications 1 à 3, dans lequel la couche centrale comprend entre 30 % en poids et 47,5 % en poids, de manière encore plus préférée entre 35 % en poids et 45 % en poids, de manière encore plus préférée entre 37,5 % en poids et 42,5 % en poids, d'un premier copolymère d'éthylène sur la base du poids total de la couche centrale.

5. Film multicouche selon l'une quelconque des revendications 1 à 4, dans lequel la couche centrale comprend entre 30 % en poids et 47,5 % en poids, de manière encore plus préférée entre 35 % en poids et 45 % en poids, de manière encore plus préférée entre 37,5 % en poids et 42,5 % en poids, d'un second copolymère d'éthylène sur la base du poids total de la couche centrale.

6. Film multicouche selon l'une quelconque des revendications 1 à 5, dans lequel la couche centrale comprend entre 5 % en poids et 40 % en poids, de manière encore plus préférée entre 10 % en poids et 30 % en poids, de manière encore plus préférée entre 15 % en poids et 25 % en poids, d'un polyéthylène, de préférence du LDPE, sur la base du poids total de la couche centrale.

7. Film multicouche selon l'une quelconque des revendications 1 à 6, dans lequel la masse volumique, qui est déterminée à l'aide de la norme ISO 1872-2, du premier copolymère d'éthylène de la couche centrale est entre 0,900 et < 0,909 g/cm³.

8. Film multicouche selon l'une quelconque des revendications 1 à 7, dans lequel la masse volumique du second copolymère d'éthylène de la couche centrale est entre 0,911 g/cm³ et < 0,918 g/cm³, de préférence 0,911 et 0,915 g/cm³, de manière davantage préférée, la masse volumique d'un copolymère d'éthylène est de > 0,911 à 0,915 g/cm³, dans lequel les masses volumiques sont déterminées à l'aide de la norme ISO 1872-2.

9. Film multicouche selon l'une quelconque des revendications 1 à 8, dans lequel le polyéthylène de la couche centrale est le LDPE et/ou la masse volumique du polyéthylène et/ou du LDPE de la couche centrale est entre 0,915 à 0,932 g/cm³, de manière encore plus préférée par exemple de 0,917 à 0,926 g/cm³, dans lequel les masses volumiques sont déterminées à l'aide de la norme ISO 1872-2.

10. Film multicouche selon l'une quelconque des revendications 1 à 9, dans lequel l'indice de fluage du premier et/ou du second copolymère d'éthylène est dans la plage de 0,1 à 4 g/10 min, de préférence de 0,3 à 3 g/10 min, de manière encore plus préférée de 0,2 à 2 g/10 min, de manière encore plus préférée de 0,5 à 1,5 g/10 min, dans lequel l'indice de fluage est déterminé conformément à la norme ISO 1133:2011, 190 °C, 2,16 kg.

11. Film multicouche selon l'une quelconque des revendications 1 à 10, dans lequel le rapport des indices de fluage entre le second copolymère d'éthylène et le premier copolymère d'éthylène est entre 0,5 et 1,5, de préférence entre > 1 et 1,5.

12. Article et/ou emballage comprenant un film multicouche selon l'une quelconque des revendications 1 à 11.

13. Utilisation du film multicouche selon l'une quelconque des revendications 1 à 11 pour des applications de houssage.
